# EUROPEAN PATENT SPECIFICATION

(11) **EP 0 995 302 B1**
(45) Date of publication and mention of the grant of the patent: **09.03.2005**
(21) Application number: 98933799.3
(22) Date of filing: 15.07.1998
(51) Int. Cl.: H04M 15/00, H04Q 3/00, H04M 3/36

(54) **MONITORING A COMMUNICATION NETWORK**
NETZWERKÜBERWACHUNG
SURVEILLANCE D'UN RESEAU DE COMMUNICATIONS

(30) Priority: 22.07.1997 GB 9715498
(43) Date of publication of application: 26.04.2000
(73) Proprietor: Azure Solutions Limited, London EC2M 7BT (GB)
(72) Inventor: EDWARDS, Alexander, Fraser, Miles, Ipswich, Suffolk IP3 8AP (GB)
(74) Representative: Walaski, Jan Filip
(86) International application number: PCT/GB1998/002077
(87) International publication number: WO 1999/005847

(56) References cited:
- EP-A- 0 583 135
- WO-A-97/23085
- STEWART, KIMBERLY A.: "EE4984 Telecommunication Networks Project 1 Cellular Telephone Fraud" AVAILABLE FROM INTERNET: , 5 January 1995, XP002067040 http://fiddle.ee.vt.edu/courses/ee4984/pr oj_95/stewart.html>

## Description

The present invention relates to a communication network such as a telecommunications network and more particularly to the method of and apparatus for monitoring communications and communication patterns, for example, to detect fraudulent use of a telecommunications network.

There are many applications where it would be useful to be able to monitor communication patterns in a network. One such application is for detecting fraud in a telecommunications network. When fraud is perpetrated in a telecommunications network, it is often as a result of an organised ring of activity. However, the ringleader is rarely caught quickly since he will not directly make any fraudulent calls but will use accomplices to do this for him.

Currently the detection of ringleaders of such fraud groups requires a significant amount of analysis which is performed off line using large amounts of gathered data. Since this process is far from real time, the fraud ring exists for longer than is perhaps necessary.

It is an object of the present invention to provide a method of and an apparatus for monitoring communication patterns over a network and for monitoring communications over a network which can be used to detect fraudulent activity within, for example, a telecommunications network.

In accordance with a first aspect the present invention provides a method of monitoring communication patterns over a network, the method comprising an initial step of associating a mark having a numeric value with one or more entities (A-G) in the communication network, a detecting step of detecting communications between the or each marked entity and at least one further entity, and a marking step of associating a respective derived mark with each further entity that communicates with the or each marked entity, the derived mark having a numeric value calculated from the numeric value associated with the or each previous marked entity with which the further entity communicates.

This aspect of the present invention allows for the monitoring of communication patterns by detecting communications between origination and destinations e.g. communication addresses or users. This process acts as a possible fraud marking system to mark each address, node or user in the network to indicate a spread of communications. In a fraud detection system this can be used to indicate a possible site of fraudulent activity.

In one embodiment the mark associated with each marked entity has a value and marking is carried out by associating a mark value with each entity that communicates with an entity previously marked, where the mark value is calculated as a function of the mark value of the previously marked entity. In this way, the 'diffusion' of communications throughout the network from an origination point or entity can be monitored by looking at the values for each entity. Those entities which communicate with marked entities more frequently will accrue a higher value and thus the spread of communications can be monitored with a higher degree of accuracy.

One method of calculating the mark value comprises passing a fraction of the mark value of the previously marked entity to each entity that communicates with the previously marked entity.

In order to generate an average picture of communication activities between marked points in the communication network, the mark values can be made to fade with time. In a fraud detection system this enables the removal of suspicion from legitimate users who may have happened to have made a single call or infrequent calls to a suspicious user.

The mark values used can be calculated in many different ways. If a communication is detected between marked entities, the mark values associated with each of the entities can be changed as a function of the current mark values of the entities.

Points of high network activity e.g. fraudulent activity can be detected by comparing the mark values associated with the entities with a predetermined range, and identifying the or each entity having a mark value associated therewith which is outside the predetermined range. In this way, in a fraud detection system when the fraudulent activity reaches a certain level i.e. the mark values or suspicion values associated with points of the network reach a threshold, then these can be highlighted to allow intervention by operators of a fraud management system.

In a network more than one entity may be initially marked. In order to enable the communication patterns originating from each of the marked entities to be distinguished, the respective marked entities can be initially marked with respective unique marks and each entity that communicates with the or each marked entity is marked with a respective unique mark. In this way the 'diffusion' of communications throughout the network which originate from different points in the network can be distinguished.

In accordance with a second aspect of the present invention there is provided apparatus for monitoring communication patters over a network, the apparatus comprising initial marking means for associating a mark having a numeric value with one or more entities (A-G) of the communication network, detection means for detecting communications between the or each marked entity and at least one further entity, and marking means for associating a respective derived mark with each further entity that communicates with the or each marked entity, the derived mark having a numeric value calculated from the numeric value associated with the or each previously marked entity with which the further entity communicates.

In accordance with this aspect communications between marked entities are detected and in a fraud management system communications between marked entities could be indicative of fraudulent activity.

In one embodiment mark values are associated with the entities and the mark values of the entities which are in communication are detected. A value for the communication is generated based on a function of the detected mark values for the communication. The value for the communication can then be compared with a predetermined range and it can be identified whether the value for the communication is outside the predetermined range. In this way, in a fraud detection system, communications between suspicious points in the network can be monitored and if the points in the network are highly suspicious, the communication will also be marked as being highly suspicious and can be brought to the attention of an operator of a fraud management system.

In the communication network in accordance with the present invention entities can include communication nodes as communication originations and/or destinations, e.g. in a telecommunication network the communication nodes comprise telephone numbers. Also, the entities can include purported users who are identified by user related code as communication origination, e.g. in a telecommunications network an entity can comprise a charge card number or a personal number. The user related code may be used at any communication node and since charge cards and personal numbers are particularly prone to fraud, the ability to associate suspicion with such a user related code is important. It is not sufficient to merely associate suspicion with communication nodes since charge card and personal nodes may be used on any communication node for making a fraudulent communication.

WO97/23085 discloses a fraud detection system which permits customers to associate a risk with certain types of calls, for example outbound international calls to a particular country. When a risk is associated with a call, the statistic for that call is multiplied by the assigned risk factor, so any alarm threshold may be exceeded more quickly as a result.

EP-A-0583135 discloses an intelligent call screening system that receives information that provides a weighting factor indicative of the incidence of fraudulent calling to different domestic and international destinations.

Embodiments of the present invention will now be described with reference to the accompanying drawings, in which:
Figure 1 is a schematic drawing of a telecommunications network employing a suspicion system in accordance with an embodiment of the present invention;
Figure 2 is a schematic diagram of the suspicion system of Figure 1;
Figure 3 is a schematic drawing illustrating the 'diffusion' of suspicion throughout a network;
Figures 4a and 4b comprise a flow diagram illustrating a method of monitoring fraudulent activity in a telecommunication system in accordance with one embodiment of the present invention;
Figure 5 is a flow diagram illustrating a method of monitoring fraudulent communications in accordance with an embodiment of the present invention; and
Figure 6 is a flow diagram illustrating the automatic assignment of suspicion to an entity in a communication network.

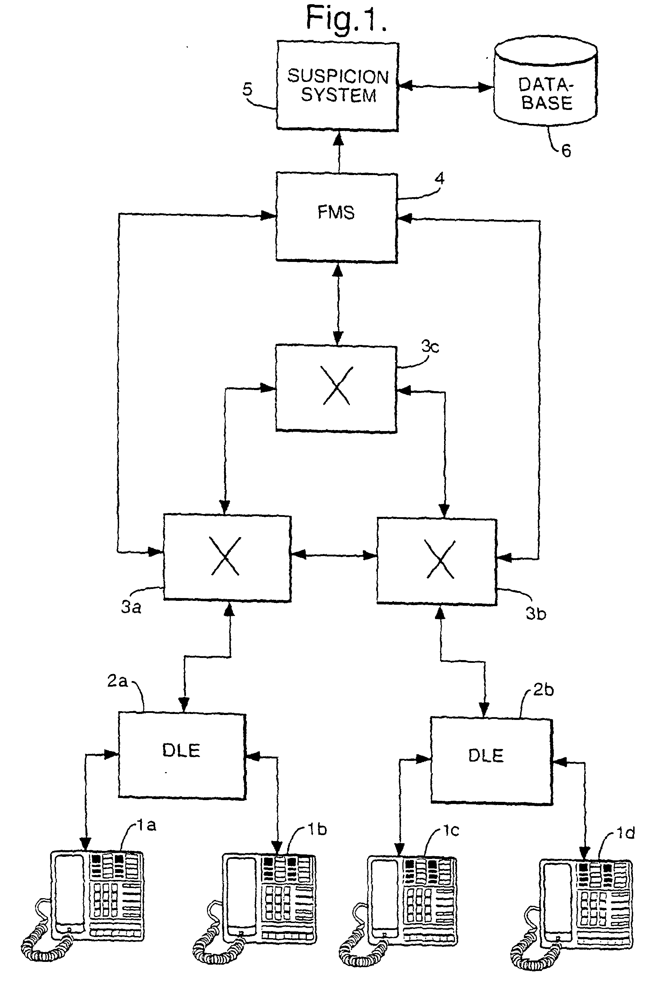

Referring now to Figure 1, there is illustrated schematically a telecommunications network utilising the suspicion system in accordance with a known embodiment of the present invention to monitor fraudulent activity.
Telephone handsets 1a, 1b, 1c and 1d make calls which are routed via the Digital Local Exchanges (DLE) 2a and 2b either to other local handsets 1a, 1b, 1c and 1d or to a network of switches 3a, 3b and 3c. A Fraud Management System (FMS) 4 monitors communications over the network of switches 3a, 3b and 3c in order to detect any fraudulent activity. Although in this embodiment the fraud management system monitors fraud at the switches, also or alternatively fraud could be monitored at the digital local exchanges.

The fraud management system 4 can comprise any known fraud management system such as one which incorporates rule based fraud detection. Such types of fraud management systems are well known and are outside the scope of the present invention. The monitoring of the communications by the fraud management system are passed on to a suspicion system 5 which has a suspicion database 6 associated therewith.

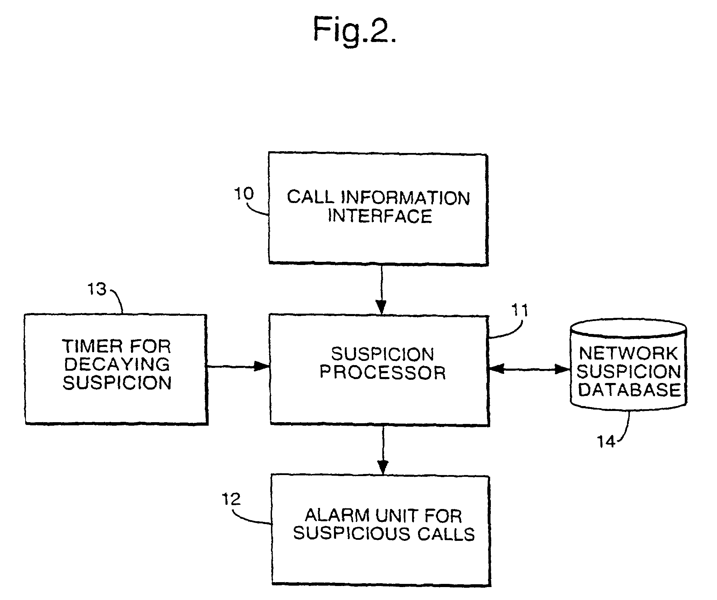

Figure 2 illustrates in more detail the suspicion system 5 and database 6 of Figure 1. A call information interface 10 provides the suspicion processor 11 with call information from the network of switches 3a, 3b and 3c. The suspicion processor 11 calculates a suspicion value for each point in the network in accordance with the call information and the calculated suspicion values for the points in the network are stored in the network suspicion database 14. The suspicion processor 11 calculates a suspicion value for calls between suspicious points in the network and if a call has a suspicion value higher than a threshold, the suspicion processor 11 can cause the alarm unit 12 to warn an operator that a suspicious call is being made. A timer 13 is provided for decaying or fading the suspicion values for the points in the network in order to remove suspicion from the legitimate customers over a predetermined period of time.

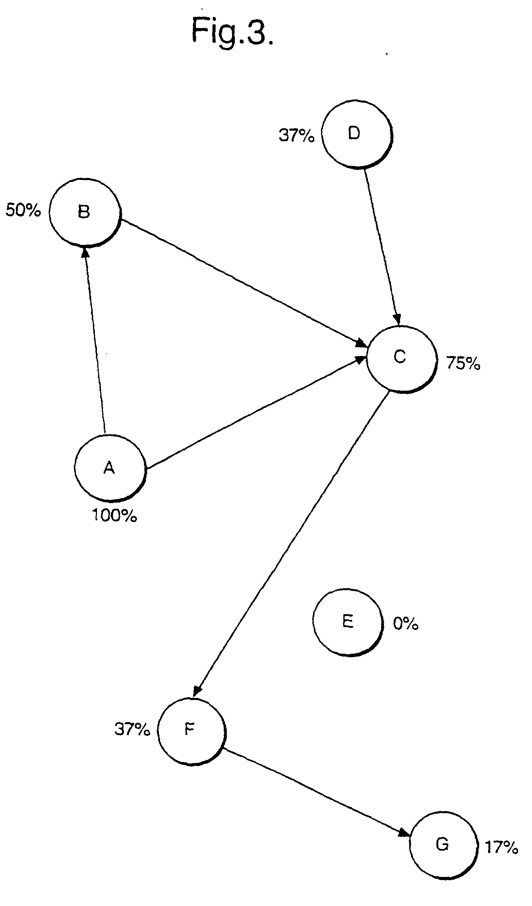

Figure 3 illustrates the principles of the passage of suspicion over a network of nodes A to B. Node A is initially marked as suspicious and is assigned a suspicion value of 100%. A call is made to node B which is therefore assigned a suspicion value of 50%. Node B then makes a call to node C and node C is thus assigned a suspicion value of 25%. Subsequently node A makes a call to node C and thus the suspicion value of node C increases to 75%. Node D makes a call to node C and is thus assigned a suspicion value of 37%. Node C then makes a call to node F and node F is assigned a suspicion value of 37%. Node F then makes a call to node G and node G is assigned a suspicion value of 17%. Since node E has had no contact with any of the nodes A-D, F or G, there is no suspicion value assigned to it.

It can thus been seen from Figure 3 that a communication pattern of the network is monitored and a pattern of fraudulent activity can be detected.

It should be noted whilst specific values and fractions for the passage of suspicion values are used in order to illustrate the principles with reference to Figure 3, any suitable method can be used to calculate the passage of suspicion values over the network.

In accordance with the principles of Figure 3, initially a fraudster's telephone activity is registered as unusual on a fraud detection system. This may result in a number of alarms being raised, and possibly the user's number being barred from further usage. When the call has been registered as being unusual a suspicion value may be associated with the user in a database which contains lists of suspicious telephone numbers together with their associated suspicion value and the telephone owner. Alternatively, this could be integrated into the normal, billing database, although transaction speed would be reduced. Thus, the system can operate off line although to improve the fraud detection rate it is preferred to operate the system on line. The suspicion value is likely to be based on the severity of the recorded incident, for example, a call of slightly long duration would have a suspicion which is a lot lower than a call to a known fraudulent location which would in turn have a lower suspicion than a suspicion based on a telephone number which has been barred recently.

Once a suspicion has been recorded for a user, there are a number of opportunities for using this information pro-actively.

If a call is made from a telephone which has a suspicion associated with it, the telephone number that is dialled can also have a suspicion value associated with it. The suspicion value associated with this new number will have a suspicion value which is lower than the telephone making the call. If the dialled number already has a suspicion rating, the new and old ratings will be combined with an appropriate function. Such a function may be to add the two values together to increase the rating for that telephone, take the highest value of the two, or take an average of the two for example. This latter approach is illustrated in Figure 3.

Also, a suspicion rating for the actual call being made can be determined. For example if a call is made from one telephone number to another telephone number and both have suspicion values associated therewith, the telephone calls may be very suspicious for fraud related purposes.

An extension to this idea is that a call made from any number to a number which has a suspicion value will cause the number calling to also be made suspicious i.e. to be assigned a suspicion value (as the node D has acquired a suspicion value for calling the node C in Figure 3). In the arrangement of Figure 3 a single suspicion value is used for both ingoing and outgoing calls. However, two different values may be used one for outgoing calls and the other for incoming calls.

In addition to maintaining a suspicion value, the number of suspicious calls made in total or the number of outgoing and incoming suspicious calls can be counted.

To provide the most complete information a 'pointer' to the call record which details the call made can be stored for each suspicious call. In this way a trace can be performed of where the fraud chain and gang network exists.

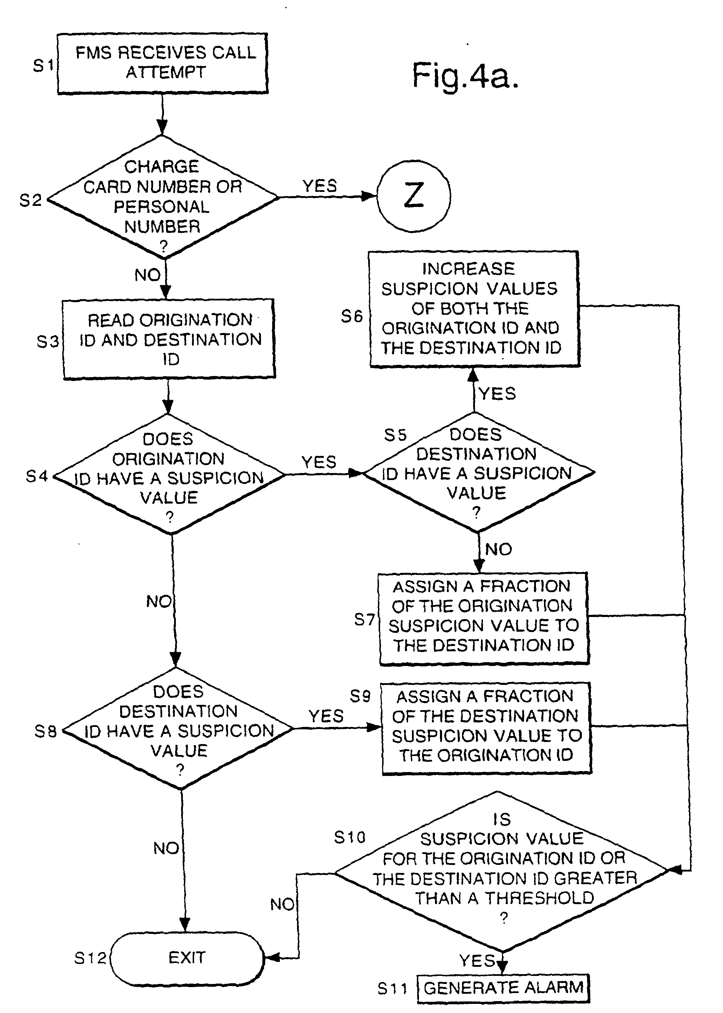

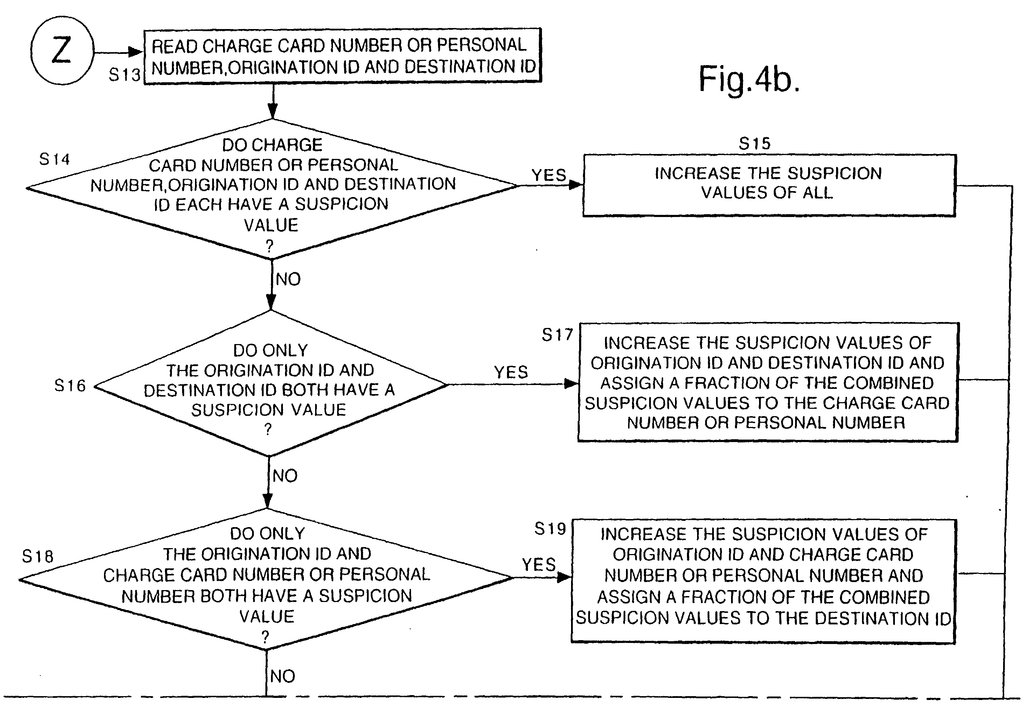

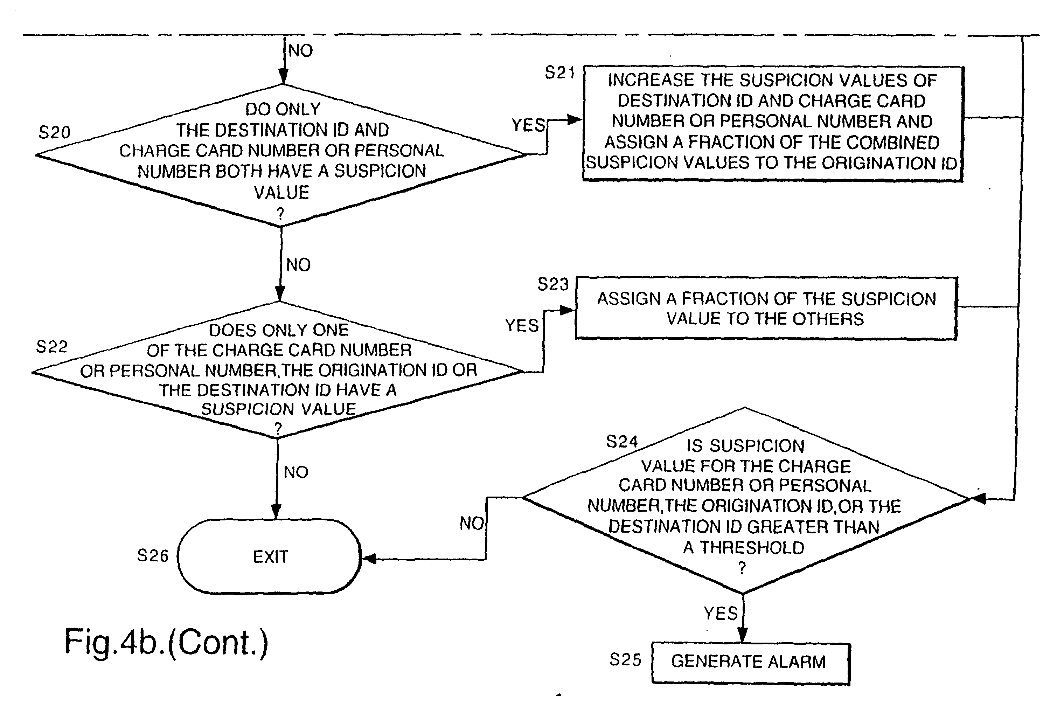

Figures 4a and 4b are a flow diagram illustrating the operation of an embodiment of the present invention in a telecommunications network wherein telephone numbers comprise the origination ID and destination ID and user related code in the form of a charge card number or personal number can be used by a user to make a call from any origination ID. Since charge card numbers and personal numbers are particularly susceptible to fraud in view of their portability within a telecommunications network and the ease with which they can be fraudulently obtained, it is important to be able to assign suspicion values not only to actual physical nodes i.e. numbers within the telecommunication network, but also to user related code such as the charge card number or personal numbers or any other entity which identifies an origination or destination within the network.

In step S1 the fraud management system receives a call attempt. In step S2 it is determined whether there is a charge card number or personal number associated with the call attempt. If there is no number associated with the call in step S3 the origination ID and destination ID are obtained from the call information and in step S4 it is determined whether the origination ID has a suspicion value associated therewith. If the origination ID has a suspicion value associated therewith, in step S5 it is determined whether the destination ID has a suspicion value associated therewith. If both the origination and destination IDs have a suspicion value associated therewith in step S6 the suspicion values of both the origination and the destination IDs are increased. If only the origination ID has a suspicion value associated therewith, in step S7 a fraction of the origination suspicion value is assigned to be associated with the destination ID. If in step S4 it is determined that the origination ID does not have a suspicion value associated therewith, in step S8 it is determined whether the destination ID has a suspicion value associated therewith and if so in step S9 a fraction of the destination ID suspicion value is assigned to be associated with the origination ID. When the suspicion value associated with the destination ID and/or the origination ID have been changed in steps S6, S7 or S9, in step S10 it is then determined whether the suspicion value for the origination ID or the destination ID is greater than a threshold. If it is greater than the threshold, in step S11 an alarm can be generated in such a manner as to bring to the attention of an operator of a fraud management system the possibility of a high degree of fraudulent activity taking place. If in step S10 the threshold is not exceeded or in step S8 there is no suspicion value associated with the destination or the origination IDs the process terminates in step S12.

If in step S2 it is determined that the call attempt has a charge card number or personal number associated therewith, in step S13 the charge card number or personal number, origination ID and destination ID are read and in step S14 it is determined whether the charge card number or personal number, origination ID, and destination ID each have a suspicion value. If they do, in step S15 the suspicion values of all of these are increased. If not, in step S16 it is determined whether only the origination ID and the destination ID both have a suspicion value. If they do, in step S17 the suspicion value of the origination ID and the destination ID are increased and a fraction of the combined suspicion of these is assigned to the charge card number or the personal number. If the origination ID and the destination ID do not both have a suspicion value in step S18 it is determined whether the origination ID and the charge card number or personal number only both have a suspicion value. If so in step S19 the suspicion value of the origination ID and the charge card number or personal number are increased and a fraction of the combined suspicion value is assigned to the destination ID. If in step S18 it is determined that the origination ID and the charge card number or personal number do not both have a suspicion value, in step S20 it is determined whether only the destination ID and the charge card number or personal number both have a suspicion value. If so in step S21 the suspicion value on the destination ID and the charge card number or personal number are increased and a fraction of the combined suspicion values is assigned to the origination ID. If in step S20 it is determined that only the destination ID and the charge card number or personal number do not both have a suspicion value, in step S22 it is determined whether only one of the origination ID, the destination ID or the charge card number or personal number have a suspicion value. If they do, in step S23 a fraction of the suspicion value is assigned to the others which do not have a suspicion value. If in step S15, S17, S19, S21 or S23 the suspicion value has changed, in step S24 it is determined whether the suspicion value for the charge card number or personal number, the origination ID or the destination ID is greater than the threshold. If so, in step S25 an alarm is generated. If not in step S26 the process is terminated. Also, if it is determined in steps S14, S16, S18, S20 and S22 that neither the charge card number or personal number, the origination ID or the destination ID have a suspicion value associated therewith, the process is terminated in step S26.

Thus in this embodiment suspicion values are spread throughout the telecommunications network in accordance with communications made between suspicious points i.e. telephone numbers and/or personal numbers in the network. If a suspicion value for a point in the network moves outside a predetermined range i.e. exceeds a threshold, this can be brought to the attention of an operator of a fraud management system to allow intervention e.g. by preventing further calls to and/or from that point in the network. In this way a call can be barred before the call is completed i.e. as soon as the call attempt is received thus allowing the provision of an automatic fraud prevention system.

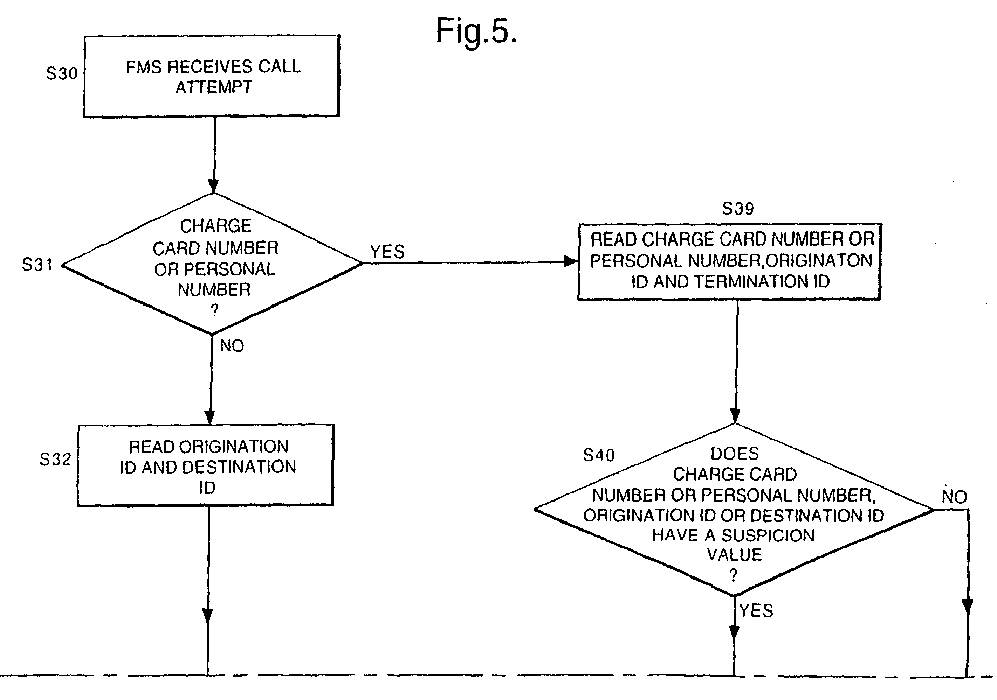

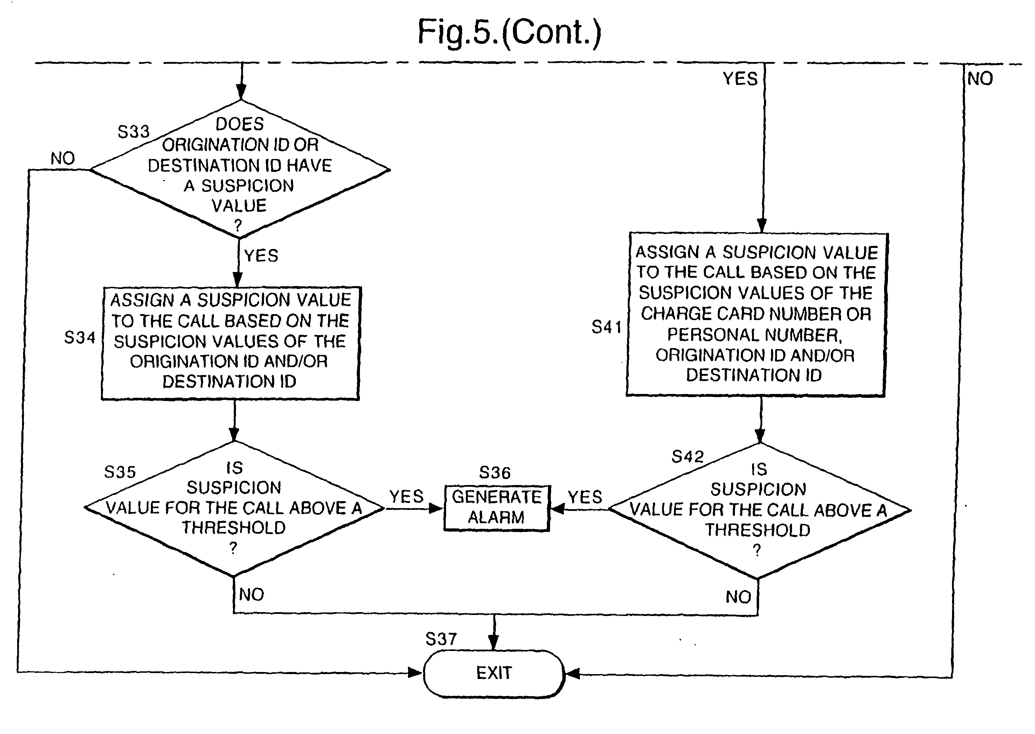

Figure 5 is a flow diagram of the operation of a system for detecting fraudulent calls. In step S30 a fraud management system receives a call attempt. In step S31 it is determined whether there is a charge card number or personal number associated with the call attempt. If not in step S32 the origination ID and the destination ID of the call are determined and in step S33 it is determined whether the origination ID or the destination ID have a suspicion value associated therewith. If there is no suspicion value associated with the origination ID or the destination ID the process terminates in step S37. If there is a suspicion value associated with the origination ID or the destination ID in step S34 a suspicion value is assigned to the call based on the suspicion values of the origination ID and/or the destination ID. In step S35 it is then determined whether the suspicion value for the call is above the threshold. If not the process terminates in step S37. If the suspicion value for the call is above the threshold in step S36 an alarm is generated. This can either allow the operator of a fraud management system to stop the call manually or to look more carefully at the activity, or the call could be automatically prevented.

If in step S31 it is determined that there is a charge card member or personal number associated with the call, in step S39 the charge card number or personal number, origination ID and termination ID are read and in step S40 it is determined whether the charge card number or personal number, origination ID or destination ID have a suspicion value associated therewith. If not the process terminates in step S37. If however they do have a suspicion value, in step S41 a suspicion value is assigned to the call based on the suspicion values of the charge card number or personal number, the origination ID and/or the destination ID. In step S42 it is determined whether the suspicion value for the call is above the threshold. If not the process terminates in step S37. If the suspicion value for the call is above the threshold an alarm is generated in step S36 in a manner as described hereinabove.

This method allows for the manual or automatic control of calls in a telecommunications network. When calls are made between highly suspicious points in the network, the call made will thus acquire a suspicion value which can allow the call to be barred if necessary.

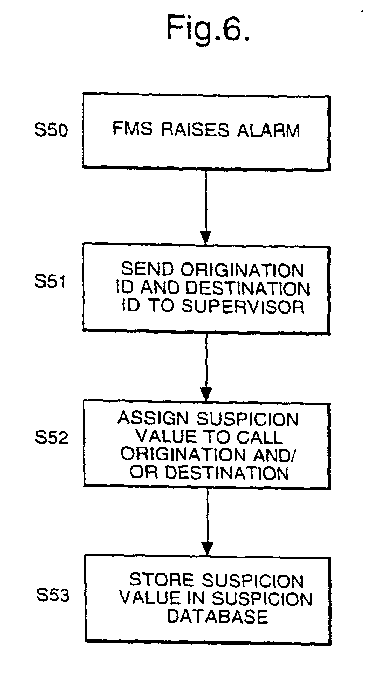

Figure 6 is a flow diagram of a method of initially automatically assigning a suspicion value to a point in the network based on previously determined fraudulent activity. In step S50 the fraud management system raises an alarm for a suspicious call. In step S51 the origination ID and destination ID are sent to the fraud management system supervisor. In step S52 the supervisor can assign a suspicion value to the call origination, and/or destination and in step S53 the suspicion value is stored in the suspicion database for the call origination and/or destination. The call origination and/or destination i.e. the entity in the communications network can comprise any information identifying a communication location, communication node, or a user e.g. telephone number, personal number or charge card number. Thus when calls are subsequently made from or to the origination ID with the suspicion value, suspicion values will permeate throughout the network in accordance with the calls made between suspicious points as described hereinabove.

Although in the embodiments described hereinabove communications have been described as being directly from an origination to a destination i.e. direct communications between single entities in the telecommunications network, the present invention is also applicable to more complex methods of communications. For example, a call may be diverted. In such an arrangement both of the destination entities i.e. nodes can be marked. Also, for personal numbers where a person has a single telephone number and calls are routed to telephone numbers in dependence upon where the user is, both the personal number and the ultimate destination telephone number can be marked. The present invention is also applicable to identify fraud in a telecommunications network where there are more than two participants e.g. in a three way conversion or when a conference call has been set up.

Although the present invention as has been described hereinabove with reference to a telecommunications network, the present invention is applicable to any network to enable the monitoring of communications between marked nodes and to build up a pattern of communications from one or more marked nodes or points in the network. This simple labelling technique can provide useful information for the management or control of any kind of network such as a network of computers. The information can for instance be used to obtain a pattern of network traffic originating from a point in order to design efficient network connections.

Although the present invention has been described hereinabove with reference to specific embodiments, it will be apparent to a skilled person in the art that modifications are possible within the scope of the present invention as defined by the appended claims.

## Claims

1. A method of monitoring communication patterns over a network, the method comprising:
an initial step of associating a mark having a numeric value with one or more entities (A-G) in the communication network;
a detecting step of detecting communications between the or each marked entity and at least one further entity; and
a marking step of associating a respective derived mark with each further entity that communicates with the or each marked entity, the derived mark having a numeric value calculated from the numeric value associated with the or each previous marked entity with which the further entity communicates.

2. A method according to claim 1, wherein said detecting step and said marking step are carried out for a plurality of communications, the respective derived marks being calculated from a combination of the previous value of the derived mark and the numeric value of the or each previously marked entity with which the further entity communicates.

3. A method according to claim 1 or 2, wherein said marking step comprises passing a fraction of the mark value of the previously marked entity to each entity that communicates with the previously marked entity.

4. A method according to any one of the preceding claims including a reduction step of reducing the mark values with time.

5. A method according to any one of the preceding claims wherein if said detecting step detects a communication between marked entities, said marking step includes the step of changing the mark values associated with each of the entities as a function of the mark values associated with the entities.

6. A method according to any one of the preceding claims including the step of identifying a communication between marked entities.

7. A method according to claim 6 including the step of assigning a value to the communication as a function of the mark values of the marked entities in communication.

8. A method according to claim 6 or 7 including the steps of comparing the value of the communication with a predetermined range, and generating a signal if the value is outside the predetermined range.

9. A method according to any one of the preceding claims including the steps of comparing the mark values associated with the entities with a predetermined range, and identifying the or each entity having a mark value associated therewith which is outside the predetermined range.

10. A method according to any one of the preceding claims wherein the entities of the communication network include communication nodes as communication originations and/or destinations.

11. A method according to claim 10 wherein the entities of the communication network include purported users identified by user related codes as communication originations and/or destinations.

12. A method according to any one of the preceding claims wherein in said initial step the one or more entities in the communication network are also marked with respective unique identifiers, and in said marking step each entity that communicates with the or each marked entity is marked with the respective unique identifiers.

13. A method according to any one of the preceding claims including the step of storing the identities of each entity in each detected communication with a marked entity.

14. A method according to any one of the preceding claims including the step of storing information on each detected communication with a marked entity.

15. A method according to any one of the preceding claims including the preliminary step of determining which entity in the communication network is to be marked in said initial step based on previous communications by said entities.

16. A method according to any one of the preceding claims further comprising a generating step of generating a signal indicative of the detected communications between the marked entities.

17. A method according to claim 16 wherein said generating step comprises generating a numeric value for the communication based on a function of the detected mark values for the communication, the generated numeric value being different from the numeric mark values.

18. Apparatus for monitoring communication patters over a network, the apparatus comprising:
initial marking means for associating a mark having a numeric value with one or more entities (A-G) of the communication network;
detection means for detecting communications between the or each marked entity and at least one further entity; and
marking means for associating a respective derived mark with each further entity that communicates with the or each marked entity, the derived mark having a numeric value calculated from the numeric value associated with the or each previously marked entity with which the further entity communicates.

19. Apparatus according to claim 18 wherein said detection means and said marking means are adapted to detect and mark said entities for a plurality of communications, the respective derived marks being calculated from a combination of the previous value of the desired mark and the numeric value of the or each previously marked entity with which the further entity communicates.

20. Apparatus according to claim 18 or 19 wherein said marking means is adapted to pass a fraction of the mark value of the previously marked entity to each entity that communicates with the previously marked entity.

21. Apparatus according to any one of claims 18 to 21 including means for reducing the mark values with time.

22. Apparatus according to any one of claims 18 to 21 wherein if said detection means detects a communication between marked entities, said marking means is adapted to change the mark values associated with each of the entities as a function of the mark values associated with the entities.

23. Apparatus according to any one of claims 18 to 22 including means for identifying communications between marked entities.

24. Apparatus according to claim 23 including means for identifying communications between marked entities, and means for assigning a value to the identified communications as a function of the marked values of the marked entities in the communication.

25. Apparatus according to claim 24 including means for comparing the value of the communication with a predetermined range, and means for generating a signal if the value is outside the predetermined range.

26. Apparatus according to any one of claims 18 to 25 including means for comparing the mark values associated with the entities with a predetermined range, and means for identifying the or each entity having a mark value associated therewith which is outside the predetermined range.

27. Apparatus according to any one of claims 18 to 26 wherein the entities of the communication network include communication nodes and communication originations and/or destinations.

28. Apparatus according to any one of claims 18 to 27 wherein the entities of the communication network include purported users identified by user related codes as communication originations and/or destinations.

29. Apparatus according to any one of claims 18 to 28 wherein said initial marking means is adapted to also mark the one or more entities in the communication network with respective unique identifiers, and said marking means is adapted to mark each entity that communicates with the or each marked entity with the respective unique identifier.

30. Apparatus according to any one of claims 18 to 29 including means for storing the identities of each entity in each detected communication with a marked entity.

31. Apparatus according to any one of claims 18 to 30 including means for storing information on each detected communication with a marked entity.

32. Apparatus according to any one of claims 18 to 31 including means for determining which entity in the communication network is to be marked by said initial marking means based on previous communications by said entities.

33. Apparatus according to any one of claims 18 to 32, further comprising generating means for generating a signal indicative of the detected communications between the marked entities.

34. Apparatus according to claim 33, wherein said generating means is adapted to generate a numeric value for the communication based on a function of the detected mark values for the communication, the generated numeric value being different than the numeric mark values.

## Patentansprüche

1. Verfahren zum Überwachen von Kommunikationsmustern über ein Netzwerk, wobei das Verfahren folgendes aufweist:
einen Anfangsschritt zum Zuordnen einer Markierung mit einem numerischen Wert zu einem oder mehreren Subjekten (A-G) im Kommunikationsnetzwerk;
einen Erfassungsschritt zum Erfassen von Kommunikationen zwischen dem oder jedem markierten Subjekt und wenigstens einem weiteren Subjekt; und
einen Markierungsschritt zum Zuordnen einer jeweiligen abgeleiteten Markierung zu jedem weiteren Subjekt, das mit dem oder jedem markierten Subjekt kommuniziert, wobei die abgeleitete Markierung einen numerischen Wert hat, der aus dem numerischen Wert berechnet ist, der dem oder jedem zuvor markierten Subjekt zugeordnet ist, mit welchem das weitere Subjekt kommuniziert.

2. Verfahren nach Anspruch 1, wobei der Erfassungsschritt und der Markierungsschritt für eine Vielzahl von Kommunikationen ausgeführt werden, wobei die jeweiligen abgeleiteten Markierungen aus einer Kombination des vorherigen Werts der abgeleiteten Markierung und des numerischen Werts des oder jedes zuvor markierten Subjekts berechnet werden, mit welchem das weitere Subjekt kommuniziert.

3. Verfahren nach Anspruch 1 oder 2, wobei der Markierungsschritt ein Übergeben eines Bruchteils des Markierungswerts des zuvor markierten Subjekts zu jedem Subjekt aufweist, das mit dem zuvor markierten Subjekt kommuniziert.

4. Verfahren nach einem der vorangehenden Ansprüche, das einen Reduzierungsschritt zum Reduzieren der Markierungswerte mit der Zeit enthält.

5. Verfahren nach einem der vorangehenden Ansprüche, wobei der Markierungsschritt dann, wenn der Erfassungsschritt eine Kommunikation zwischen markierten Subjekten erfasst, den Schritt zum Ändern der jedem der Subjekte zugeordneten Markierungswerte als Funktion der den Subjekten zugeordneten Markierungswerte enthält.

6. Verfahren nach einem der vorangehenden Ansprüche, das den Schritt zum Identifizieren einer Kommunikation zwischen markierten Subjekten enthält.

7. Verfahren nach Anspruch 6, das den Schritt zum Zuordnen eines Werts zur Kommunikation als Funktion der Markierungswerte der markierten Subjekte, die kommunizieren, enthält.

8. Verfahren nach Anspruch 6 oder 7, das die Schritte zum Vergleichen des Werts der Kommunikation mit einem vorbestimmten Bereich und zum Erzeugen eines Signals, wenn der Wert außerhalb des vorbestimmten Bereichs ist, enthält.

9. Verfahren nach einem der vorangehenden Ansprüche, der die Schritte zum Vergleichen der den Subjekten zugeordneten Markierungswerte mit einem vorbestimmten Bereich und zum Identifizieren des oder jedes Subjekts mit einem ihm zugeordneten Markierungswert, der außerhalb des vorbestimmten Bereichs ist, enthält.

10. Verfahren nach einem der vorangehenden Ansprüche, wobei die Subjekte des Kommunikationsnetzwerks Kommunikationsknoten als Kommunikationsursprünge und/oder -zielorte enthalten.

11. Verfahren nach Anspruch 10, wobei die Subjekte des Kommunikationsnetzwerks durch anwenderbezogene Codes identifizierte beinhaltete Anwender als Kommunikationsursprünge und/oder -zielorte enthalten.

12. Verfahren nach einem der vorangehenden Ansprüche, wobei das eine oder die mehreren Subjekte im Kommunikationsnetzwerk beim Anfangsschritt auch mit jeweiligen eindeutigen Identifizierern markiert werden und jedes Subjekt, das mit dem oder jedem markierten Subjekt kommuniziert, beim Markierungsschritt mit den jeweiligen eindeutigen Identifizierern markiert wird.

13. Verfahren nach einem der vorangehenden Ansprüche, das den Schritt zum Speichern der Identitäten jedes Subjekts bei jeder erfassten Kommunikation mit einem markierten Subjekt enthält.

14. Verfahren nach einem der vorangehenden Ansprüche, das den Schritt zum Speichern von Information über jede erfasste Kommunikation mit einem markierten Subjekt enthält.

15. Verfahren nach einem der vorangehenden Ansprüche, das den vorbereitenden Schritt enthält, basierend auf vorherigen Kommunikationen durch die Subjekte zu bestimmen, welches Subjekt im Kommunikationsnetzwerk beim Anfangsschritt zu markieren ist.

16. Verfahren nach einem der vorangehenden Ansprüche, das weiterhin einen Erzeugungsschritt zum Erzeugen eines Signals aufweist, das die erfassten Kommunikationen zwischen den markierten Subjekten anzeigt.

17. Verfahren nach Anspruch 16, wobei der Erzeugungsschritt ein Erzeugen eines numerischen Werts für die Kommunikation basierend auf einer Funktion der erfassten Markierungswerte für die Kommunikation aufweist, wobei der erzeugte numerische Wert unterschiedlich von den numerischen Markierungswerten ist.

18. Vorrichtung zum Überwachen von Kommunikationsmustern über ein Netzwerk, wobei die Vorrichtung folgendes aufweist:
eine Anfangsmarkierungseinrichtung zum Zuordnen einer Markierung mit einem numerischen Wert zu einem oder mehreren Subjekten (A-G) des Kommunikationsnetzwerks;
eine Erfassungseinrichtung zum Erfassen von Kommunikationen zwischen dem oder jedem markierten Subjekt und wenigstens einem weiteren Subjekt; und
eine Markierungseinrichtung zum Zuordnen einer jeweiligen abgeleiteten Markierung zu jedem weiteren Subjekt, das mit dem oder jedem markierten Subjekt kommuniziert, wobei die abgeleitete Markierung einen numerischen Wert hat, der aus dem numerischen Wert berechnet ist, der dem oder jedem zuvor markierten Subjekt zugeordnet ist, mit welchem das weitere Subjekt kommuniziert.

19. Vorrichtung nach Anspruch 18, wobei die Erfassungseinrichtung und die Markierungseinrichtung dazu geeignet sind, die Subjekte für eine Vielzahl von Kommunikationen zu erfassen und zu markieren, wobei die jeweiligen abgeleiteten Markierungen aus einer Kombination des vorherigen Werts der abgeleiteten Markierung und des numerischen Werts des oder jedes zuvor markierten Subjekts berechnet werden, mit welchem das weitere Subjekt kommuniziert.

20. Vorrichtung nach Anspruch 18 oder 19, wobei die Markierungseinrichtung dazu geeignet ist, einen Bruchteil des Markierungswerts des zuvor markierten Subjekts zu jedem Subjekt zu übergeben, das mit dem zuvor markierten Subjekt kommuniziert.

21. Vorrichtung nach einem der Ansprüche 18 bis 20, die eine Einrichtung zum Reduzieren der Markierungswerte mit der Zeit enthält.

22. Vorrichtung nach einem der Ansprüche 18 bis 21, wobei die Markierungseinrichtung dann, wenn die Erfassungseinrichtung eine Kommunikation zwischen markierten Subjekten erfasst, dazu geeignet ist, die jedem der Subjekte zugeordneten Markierungswerte als Funktion der den Subjekten zugeordneten Markierungswerte zu ändern.

23. Vorrichtung nach einem der Ansprüche 18 bis 22, die eine Einrichtung zum Identifizieren von Kommunikationen zwischen markierten Subjekten enthält.

24. Vorrichtung nach Anspruch 23, die eine Einrichtung zum Identifizieren von Kommunikationen zwischen markierten Subjekten enthält, und eine Einrichtung zum Zuordnen eines Werts zu den identifizierten Kommunikationen als Funktion der markierten Werte der markierten Subjekte, die kommunizieren.

25. Vorrichtung nach Anspruch 24, die eine Einrichtung zum Vergleichen des Werts der Kommunikation mit einem vorbestimmten Bereich und eine Einrichtung zum Erzeugen eines Signals, wenn der Wert außerhalb des vorbestimmten Bereichs ist, enthält.

26. Vorrichtung nach einem der Ansprüche 18 bis 25, die eine Einrichtung zum Vergleichen der den Subjekten zugeordneten Markierungswerte mit einem vorbestimmten Bereich und eine Einrichtung zum Identifizieren des oder jedes Subjekts mit einem ihm zugeordneten Markierungswert, der außerhalb des vorbestimmten Bereichs ist, enthält.

27. Vorrichtung nach einem der Ansprüche 18 bis 26, wobei die Subjekte des Kommunikationsnetzwerks Kommunikationsknoten und Kommunikationsursprünge und/oder -zielorte enthalten.

28. Vorrichtung nach einem der Ansprüche 18 bis 27, wobei die Subjekte des Kommunikationsnetzwerks durch anwenderbezogene Codes identifizierte beinhaltete Anwender als Kommunikationsursprünge und/oder -zielorte enthalten.

29. Vorrichtung nach einem der Ansprüche 18 bis 28, wobei die Anfangsmarkierungseinrichtung dazu geeignet ist, auch das eine oder die mehreren Subjekte im Kommunikationsnetzwerk mit jeweiligen eindeutigen Identifizierern zu markieren, und die Markierungseinrichtung dazu geeignet ist, jedes Subjekt, das mit dem oder jedem markierten Subjekt kommuniziert, mit dem jeweiligen eindeutigen Identifizierer zu markieren.

30. Vorrichtung nach einem der Ansprüche 18 bis 29, die eine Einrichtung zum Speichern der Identitäten jedes Subjekts bei jeder erfassten Kommunikation mit einem markierten Subjekt enthält.

31. Vorrichtung nach einem der Ansprüche 18 bis 30, die eine Einrichtung zum Speichern von Information über jede erfasste Kommunikation mit einem markierten Subjekt enthält.

32. Vorrichtung nach einem der Ansprüche 18 bis 31, die eine Einrichtung enthält, um basierend auf vorherigen Kommunikationen durch die Subjekte zu bestimmen, welches Subjekt im Kommunikationsnetzwerk durch die Anfangsmarkierungseinrichtung zu markieren ist.

33. Vorrichtung nach einem der Ansprüche 18 bis 32, die weiterhin eine Erzeugungseinrichtung zum Erzeugen eines Signals aufweist, das die erfassten Kommunikationen zwischen den markierten Subjekten anzeigt.

34. Vorrichtung nach Anspruch 33, wobei die Erzeugungseinrichtung dazu geeignet ist, einen numerischen Wert für die Kommunikation basierend auf einer Funktion der erfassten Markierungswerte für die Kommunikation zu erzeugen, wobei der erzeugte numerische Wert unterschiedlich von den numerischen Markierungswerten ist.

## Revendications

1. Procédé de surveillance de profils de communication sur un réseau, le procédé comprenant :
une étape initiale consistant à associer une marque ayant une valeur numérique à une ou plusieurs entités (A-G) dans le réseau de communication ;
une étape de détection consistant à détecter des communications entre l'entité ou chaque entité marquée et au moins une entité supplémentaire ; et
une étape de marquage consistant à associer une marque dérivée à chaque entité supplémentaire qui communique avec la ou chaque entité marquée, la marque dérivée ayant une valeur numérique calculée à partir de la valeur numérique associée à la ou chaque entité marquée précédente avec laquelle l'entité supplémentaire communique.

2. Procédé selon la revendication 1, dans lequel l'étape de détection et l'étape de marquage sont accomplies pour une multiplicité de communications, les marques dérivées respectives étant calculées à partir d'une combinaison de la valeur précédente de la marque dérivée et de la valeur numérique de la ou de chaque entité marquée précédemment avec laquelle l'entité supplémentaire communique.

3. Procédé selon la revendication 1 ou 2, dans lequel l'étape de marquage comprend la transmission d'une fraction de la valeur de marque de l'entité marquée précédemment à chaque entité qui communique avec l'entité marquée précédemment.

4. Procédé selon l'une quelconque des revendications précédentes, incluant une étape de réduction consistant à réduire les valeurs de marques au cours du temps.

5. Procédé selon l'une quelconque des revendications précédentes, dans lequel, si l'étape de détection détecte une communication entre des entités marquées, l'étape de marquage comprend l'étape consistant à changer les valeurs de marques associées à chacune des entités, en fonction des valeurs de marques associées aux entités.

6. Procédé selon l'une quelconque des revendications précédentes, incluant l'étape d'identification d'une communication entre entités marquées.

7. Procédé selon la revendication 6, incluant l'étape d'assignation d'une valeur à la communication en fonction des valeurs de marques des entités marquées en communication.

8. Procédé selon la revendication 6 ou 7, incluant les étapes consistant à comparer la valeur de la communication avec une plage prédéterminée, et à générer un signal si la valeur est à l'extérieur de la plage prédéterminée.

9. Procédé selon l'une quelconque des revendications précédentes, incluant les étapes consistant à comparer les valeurs de marques associées aux entités avec une plage prédéterminée, et à identifier l'entité ou chaque entité ayant une valeur de marque associée à elle qui est à l'extérieur de la plage prédéterminée.

10. Procédé selon l'une quelconque des revendications précédentes, dans lequel les entités du réseau de communication comprennent des noeuds de communication en tant qu'origines et/ou destinations de communication.

11. Procédé selon la revendication 10, dans lequel les entités du réseau de communication comprennent des utilisateurs ciblés identifiés, par des codes liés aux utilisateurs, comme origines et/ou destinations de communications.

12. Procédé selon l'une quelconque des revendications précédentes dans lequel, dans l'étape initiale, la ou les entités dans le réseau de communication sont également marquées avec des identificateurs spécifiques respectifs, et dans l'étape de marquage, chaque entité qui communique avec la ou chaque entité marquée est marquée avec les identificateurs spécifiques respectifs.

13. Procédé selon l'une quelconque des revendications précédentes, incluant l'étape consistant à stocker les identités de chaque entité dans chaque communication détectée avec une entité marquée.

14. Procédé selon l'une quelconque des revendications précédentes, incluant l'étape consistant à stocker de l'information sur chaque communication détectée avec une entité marquée.

15. Procédé selon l'une quelconque des revendications précédentes, incluant l'étape préliminaire consistant à déterminer quelle entité dans le réseau de communication doit être marquée à l'étape initiale, sur la base de communications précédentes, par lesdites entités.

16. Procédé selon l'une quelconque des revendications précédentes, comprenant en outre une étape de génération consistant à générer un signal indiquant les communications détectées entre les entités marquées.

17. Procédé selon la revendication 16, dans lequel l'étape de génération comprend la génération d'une valeur numérique pour la communication basée sur une fonction des valeurs de marques détectées pour la communication, la valeur numérique générée étant différente des valeurs de marques numériques.

18. Appareil pour surveiller des profils de communication sur un réseau, l'appareil comprenant :
un moyen de marquage initial pour associer une marque ayant une valeur numérique à une ou plusieurs entités (A-G) dans le réseau de communication ;
un moyen de détection pour détecter des communications entre la ou chaque entité marquée et au moins une entité supplémentaire ; et
un moyen de marquage pour associer une marque dérivée respective à chaque entité supplémentaire qui communique avec la ou chaque entité marquée, la marque dérivée ayant une valeur numérique calculée d'après la valeur numérique associée à la ou chaque entité marquée précédemment avec laquelle l'entité supplémentaire communique.

19. Appareil selon la revendication 18, dans lequel le moyen de détection et le moyen de marquage sont adaptés pour détecter et marquer lesdites entités pour une multiplicité de communications, les marques dérivées respectives étant calculées à partir d'une combinaison de la valeur précédente de la marque dérivée et de la valeur numérique de la ou de chaque entité marquée précédemment avec laquelle l'entité supplémentaire communique.

20. Appareil selon la revendication 18 ou 19, dans lequel le moyen de marquage est adapté pour transmettre une fraction de la valeur de marque de l'entité marquée précédemment à chaque entité qui communique avec l'entité marquée précédemment.

21. Appareil selon l'une quelconque des revendications 18 à 21, incluant un moyen pour réduire les valeurs de marques au cours du temps.

22. Appareil selon l'une quelconque des revendications 18 à 21, dans lequel, si le moyen de détection détecte une communication entre des entités marquées, le moyen de marquage est adapté pour changer les valeurs de marques associées à chacune des entités en fonction des valeurs de marques associées aux entités.

23. Appareil selon l'une quelconque des revendications 18 à 22, incluant un moyen pour identifier des communications entre entités marquées.

24. Appareil selon la revendication 23, incluant un moyen pour identifier des communications entre entités marquées, et un moyen pour assigner une valeur aux communications identifiées, en fonction des valeurs marquées des entités marquées dans la communication.

25. Appareil selon la revendication 24, incluant un moyen pour comparer la valeur de la communication avec une plage prédéterminée, et un moyen pour générer un signal si la valeur est à l'extérieur de la plage prédéterminée.

26. Appareil selon l'une quelconque des revendications 18 à 25, incluant un moyen pour comparer les valeurs de marques associées aux entités avec une plage prédéterminée, et un moyen pour identifier la ou chaque entité ayant une valeur de marque associée à elle qui est à l'extérieur de la plage prédéterminée.

27. Appareil selon l'une quelconque des revendications 18 à 26, dans lequel les entités du réseau de communication comprennent des noeuds de communication et des origines et/ou destinations de communications.

28. Appareil selon l'une quelconque des revendications 18 à 27, dans lequel les entités du réseau de communication comprennent des utilisateurs ciblés identifiés, par des codes liés aux utilisateurs, en tant qu'origines et/ou destinations de communications.

29. Appareil selon l'une quelconque des revendications 18 à 28, dans lequel le moyen de marquage initial est adapté pour marquer également la ou les entités dans le réseau de communication avec des identificateurs spécifiques respectifs, et le moyen de marquage est adapté pour marquer avec l'identificateur spécifique respectif chaque entité qui communique avec la ou chaque entité marquée.

30. Appareil selon l'une quelconque des revendications 18 à 29, incluant un moyen pour stocker les identités de chaque entité dans chaque communication détectée avec une entité marquée.

31. Appareil selon l'une quelconque des revendications 18 à 30, incluant un moyen pour stocker de l'information sur chaque communication détectée avec une entité marquée.

32. Appareil selon l'une quelconque des revendications 18 à 31, incluant un moyen pour déterminer quelle entité dans le réseau de communication doit être marquée par le moyen de marquage initial, sur la base de communications précédentes par lesdites entités.

33. Appareil selon l'une quelconque des revendications 18 à 32, comprenant en outre un moyen de génération pour générer un signal indiquant les communications détectées entre les entités marquées.

34. Appareil selon la revendication 33, dans lequel le moyen de génération est adapté pour générer une valeur numérique pour la communication basée sur une fonction des valeurs de marques détectées pour la communication, la valeur numérique générée étant différente des valeurs de marques numériques.
